# EUROPÄISCHE PATENTSCHRIFT

(11) **EP 0 883 455 B1**
(45) Veröffentlichungstag und Bekanntmachung des Hinweises auf die Patenterteilung: **14.11.2001**
(21) Anmeldenummer: 97905084.6
(22) Anmeldetag: 26.02.1997
(51) Int. Cl.: B23B 51/02, B23P 15/32

(54) **BOHRWERKZEUG FÜR WERKZEUGMASCHINEN SOWIE VERFAHREN ZU DESSEN HERSTELLUNG**
DRILLING TOOL FOR MACHINE TOOLS AND METHOD OF PRODUCING THE SAME
OUTIL D'ALESAGE POUR MACHINES-OUTILS ET SON PROCEDE DE PRODUCTION

(30) Priorität: 29.02.1996 DE 19607594
(43) Veröffentlichungstag der Anmeldung: 16.12.1998
(73) Patentinhaber: KOMET Präzisionswerkzeuge Robert Breuning GmbH, D-74354 Besigheim (DE)
(72) Erfinder: SCHEER, Gerhard, D-74369 Löchgau (DE); BAXIVANELIS, Konstantin, D-74354 Besigheim (DE)
(74) Vertreter: Wolf, Eckhard, Dr.-Ing.
(86) Internationale Anmeldenummer: EP9700901
(87) Internationale Veröffentlichungsnummer: WO9731742

(56) Entgegenhaltungen:
- EP-A- 0 187 647
- EP-A- 0 549 548
- EP-A- 0 589 333
- EP-A- 0 642 863
- DE-A- 2 843 788
- DE-A- 3 545 586
- DE-A- 4 241 140
- GB-A- 1 161 863

## Beschreibung

Die Erfindung betrifft ein Bohrwerkzeug für Werkzeugmaschinen der im Oberbegriff des Anspruchs 1 angegebenen Gattung sowie ein Verfahren zur Herstellung eines derartigen Bohrwerkzeugs.

Es ist ein Bohrwerkzeug dieser Art bekannt (EP-A 0 589 333), das einen Bohrerkörper mit zwei an ihren Flanken durch wendelförmig gekrümmte Rippen begrenzte Spanfördernuten sowie einen stirnseitig am Bohrerkörper angeordneten Schneidkopf aufweist. Der Schneidkopf weist zwei radial nach außen durch sich zu einem gemeinsamen Umfangszylinder ergänzende teilzylindrische Umfangsflächen begrenzte und durch in Umfangsrichtung angrenzende, im wesentlichen achsparallel ausgerichtete, in Spanablaufrichtung in die benachbarten Spanfördernuten mündende Spanräume voneinander getrennte Segmentpartien auf. Weiter weist der Schneidkopf zwei Schneidplatten auf; die in unterschiedlichen radialen Abständen von der Bohrerachse mit einander teilweise überlappenden Arbeitsbereichen in je einer Ausnehmung der Segmentpartien im Bereich einer achsparallelen radialen Spanleitfläche vorzugsweise mit zu dieser fluchtender Spanfläche angeordnet sind, und die jeweils mindestens eine über den Bohrkopf überstehende wirksame Schneidkante aufweisen, wobei die Schneidkante der äußersten Schneidplatte radial über die betreffende teilzylindrische Umfangsfläche übersteht und die Spanleitflächen jeweils an einer Übergangsstelle in Spanablaufrichtung in eine wendelförmig gekrümmte Flanke der benachbarten Spanfördernuten übergehen. Hinzu kommt, daß der Bohrerkörper an seinem dem Schneidkopf abgewandten Ende einen rippenfreien, einen zentralen Kühlmittelversorgungskanal enthaltenden Bohrerschaft aufweist und daß in den Rippen des Bohrerkörpers Kühlmittelkanäle angeordnet sind. Die Kühlmittelkanäle greifen dort geradlinig durch den Bohrerkörper hindurch und münden in einen Querkanal, der seinerseits mit dem zentralen Versorgungskanal kommuniziert. Die Herstellung eines solchen Bohrwerkzeugs ist relativ aufwendig.

Ausgehend hiervon liegt der Erfindung die Aufgabe zugrunde, das bekannte Bohrwerkzeug dahingehend zu verbessern, daß es einfacher herstellbar ist. Eine weitere Aufgabe besteht darin, ein Verfahren anzugeben, mit dem ein solches Bohrwerkzeug hergestellt werden kann.

Zur Lösung dieser Aufgabe werden die in den Patentansprüchen 1 und 29 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäßen Maßnahmen bestehen darin, daß die Kühlmittelkanäle mit der gleichen Krümmung wie die Rippen wendelförmige gekrümmt sind und sich vom Schneidkopf aus mit konstantem Schrägwinkel gegenüber der Bohrwerkzeugachse über die gesamte Länge der Rippen erstrecken, so daß sie im Bereich des rippenfreien Bohrerschafts unmittelbar in den zentralen Versorgungskanal münden.

Um das Bohrwerkzeug auch zur Erzeugung relativ großer Bohrtiefen einsetzen zu können, muß ein wirkungsvoller, nahezu querkraftfreier Spanablauf gewährleistet sein. Um dies zu gewährleisten, wird gemäß einer bevorzugten Ausgestaltung der Erfindung vorgeschlagen, daß an mindestens einer der Übergangsstellen zwischen einer Spanleitfläche und der benachbarten Spanfördernut eine in Spanablaufrichtung von einer Begrenzungskante der Spanleitfläche aus unter Querschnittserweiterung des Spanraums stufenförmig zurückspringende, in die eine Flanke der benachbarten Spanfördernut übergehende Übergangsfläche angeordnet ist, daß die Spanräume eine der schneidplattenseitigen Spanleitfläche gegenüberliegende, im Querschnitt durch den Spanraum einen Winkel von 0° bis 110° mit dieser einschließende, an der benachbarten Segmentpartie angeordnete Spanführungsfläche aufweisen, wobei die Spanführungsfläche an mindestens einer der Übergangsstellen eine in Spanablaufrichtung von einer Begrenzungskante der Spanführungsfläche aus unter Querschnittserweiterung des Spanraums stufenförmig zurückspringende, in die eine Flanke der benachbarten Spanfördernut übergehende Übergangsfläche aufweist, welche Begrenzungskanten in den Bereich zwischen der wirksamen Schneidkante und der Mitte der benachbarten Schneidplatte reicht, so daß die Querschnittsfläche des Spanraums von der Spitze des Schneidkopfs aus zur Spanfördernut stetig zunimmt. Vorteilhafterweise nimmt die Wendelsteigung der Spanfördernuten und damit auch deren Weite in Spanablaufrichtung kontinuierlich oder stufenförmig zu.

Die Übergangsflächen im Bereich der Spanleitfläche und der Spanführungsfläche sorgen dafür, daß auf die im Spanraum entstehenden Späne beim Übergang in die Spanfördernut eine die Spanabfuhr begünstigende Schubkraft übertragen wird, ohne daß es zu einer Spanverformung oder Spanverdichtung kommt.

Bei einem als Stufenbohrer ausgebildeten Bohrwerkzeug weist der Bohrerkörper mindestens zwei durch einen Schneidkranz axial voneinander getrennte Stufenpartien mit in Spanablaufrichtung stufenförmig zunehmendem Durchmesser auf. Der Schneidkranz weist dabei zwei radial nach außen durch teilzylindrische Umfangsflächen begrenzte und durch in Umfangsrichtung angrenzende, im wesentlichen achsparallel ausgerichtete, in Spanablaufrichtung in die benachbarten Spanfördernuten mündende Spanräume voneinander getrennte Segmentpartien und mindestens eine in einer Ausnehmung einer der Segmentpartien im Bereich einer im wesentlichen achsparallelen radialen Spanleitfläche vorzugsweise mit zu dieser fluchtender Spanfläche angeordnete, mindestens eine axial über den Schneidkranz überstehende wirksame Schneidkante enthaltende Schneidplatte auf, wobei die Spanleitfläche an einer Übergangsstelle in Spanablaufrichtung in eine wendelförmig gekrümmte Flanke der benachbarten Spanfördernut übergeht und wobei an der Übergangsstelle ein in Spanablaufrichtung von einer Begrenzungskante der Spanleitfläche aus unter Querschnittserweiterung des Spanraums stufenförmig zurückspringende, in die eine Flanke der benachbarten Spanfördernut übergehende Übergangsfläche angeordnet ist.

Die stufenförmigen Übergangsflächen erstrecken sich zweckmäßig über die gesamte Breite der Spanleitfläche und/oder Spanführungsfläche und sind in Spanablaufrichtung konkav gekrümmt, so daß sie glatt in die zugehörige Flanke der Spanfördernut übergehen.

Zur verbesserten Spanabfuhr können gemäß einer vorteilhaften Ausgestaltung der Erfindung zumindest in der schneidplattenseitigen Flanke der Spanfördernuten in axialem Abstand voneinander mehrere von einem radial oder schräg zur Bohrwerkzeugachse verlaufenden Stufen- oder Wellenrand aus in Spanablaufrichtung unter lokaler Querschnittserweiterung der jeweiligen Spanfördernut zurückspringende Stufen- oder Wellenflächen angeordnet werden. Die einzelnen Stufen- oder Wellenflächen sind dabei an ihren spanablaufseitigen Enden durch einen weiteren radial oder schräg zur Bohrwerkzeugachse verlaufenden Stufen- oder Wellenrand begrenzt, wobei die einzelnen Stufen- oder Wellenflächen einen in der Spanablaufrichtung bezüglich der Wendelsteigung der betreffenden Nutenflanke zunächst zunehmenden und sodann abnehmenden Steigungswinkel aufweisen. Die Stufen- oder Wellenflächen können durch an ihren Stufen- oder Wellenrändern geschlossene oder einseitig radial nach außen hin randoffene Vertiefungen in den schneidplattenseitigen Flanken der Spanfördernuten gebildet sein. Die Vertiefungen können an ihren Stufen- oder Wellenrändern einen weitgehend beliebigen, vorzugsweise einen ovalen, kreisförmigen oder rechteckigen Umriß aufweisen. Die Stufen- oder Wellenflächen sorgen dafür, daß innerhalb der Spanfördernuten auf die Späne eine die Spanabfuhr begünstigende Schubkraft übertragen wird, ohne daß es zu einer Spanverformung oder Spanverdichtung kommt.

Um ein Heraustreten der Späne aus den Spanfördernuten in den Umfangsbereich der Rippen zu vermeiden, wird gemäß einer bevorzugten oder alternativen Ausgestaltung der Erfindung vorgeschlagen, daß die Flanken der Spanfördernuten in der Nähe ihrer Außenränder im Querschnitt einen Winkel von weniger als 90°, vorzugsweise von 0° bis 30° einschließen. Zu diesem Zweck ist es von Vorteil, wenn die Spanfördernuten eine im Querschnitt teilkreisförmige, vorzugsweise halbkreisförmige Kontur aufweisen, wobei die Querschnittskontur der Spanfördernuten zumindest im Bereich einer Flanke zu deren Außenrand hin geradlinig auslaufen kann.

Zur Verbesserung der Spanabfuhr sollte der Spanraum im Bereich der Schneidplatten bis zur Übergangsstelle relativ kurz gehalten werden. Es ist daher zweckmäßig, wenn die vorzugsweise gekrümmte Begrenzungskante vom Rand der Schneidplattenausnehmung einen über die Kantenlänge variablen Abstand aufweist, der an der schmalsten Stelle dem 0,1- bis 0,4-fachen des Schneidplattenumkreisdurchmessers entspricht. Die teilzylindrischen Umfangsflächen der Segmentpartien und die teilzylindrischen Umfangsflächen der Rippen ergänzen sich zweckmäßig zu einem gemeinsamen, durch die Spanräume und die Spanfördernuten unterbrochenen Umfangszylinder.

Um sicherzustellen, daß auch aus den Spanräumen keine Späne durch im Bereich der einander überlappenden Schneidkanten freibleibende Zwischenräume zur Umfangsfläche des Bohrers abgedrängt werden können, wird gemäß einer bevorzugten Lösungsvariante der Erfindung ein Spanleitflächenabschnitt vorgeschlagen, der einen innerhalb der einander überlappenden Arbeitsbereiche liegenden Schneidkantenteil übergreift. Dieses Problem tritt vor allem in dem zu einer radial nach innen versetzten Schneidplatte gehörenden Spanraum auf, weshalb der Spanleitflächenabschnitt einen radial außen liegenden Schneidkantenteil der radial innersten Schneidplatte übergreifen sollte. Grundsätzlich ist es jedoch auch möglich, daß der Spanleitflächenabschnitt einen radial innen liegenden Schneidkantenteil einer radial äußersten Schneidplatte übergreift, um einen dort vorhandenen Spalt zu überbrücken.

Eine weitere bevorzugte Lösungsvariante der Erfindung sieht eine an die teilzylindrische Umfangsfläche anschließende, sich von der Schneidkopf- oder Schneidkranzspitze bis in die Nähe der Übergangsstelle erstreckende, radial außen liegende Spanleitflächenbegrenzung vor, die über die Ebene der Spanfläche einer radial gegenüber dem Umfang nach innen versetzten Schneidplatte in Richtung Spanraum übersteht. Damit wird wirksam verhindert, daß die an der Schneidkante entstehenden Späne zur teilzylindrischen Umfangsfläche abgedrängt werden können. Die Spanleitflächenbegrenzung kann im Radialschnitt stufenartig oder keilförmig über die Ebene der Schneidplattenspanfläche überstehen. Zusätzlich kann die Spanleitflächenbegrenzung im Axialschnitt stufenartig oder keilförmig über die Ebene der Schneidplattenspanfläche überstehen und in Spanlaufrichtung unter Erweiterung des Spanraums divergieren, so daß die Spanabfuhr zur benachbarten Spanfördernut erleichtert wird.

Mit den erfindungsgemäßen Maßnahmen können tiefe Spanfördernuten mit großem Durchlaßquerschnitt für die Späne im Bohrerkörper untergebracht werden. Dafür sorgen die vom Schneidkopf oder Schneidkranz zum Kühlmittelversorgungskanal führenden Kühlkanäle, die in den Rippen so angeordnet sind, daß sie mit der gleichen Krümmung wie die Rippen wendelförmig gekrümmt sind und sich mit konstantem Schrägwinkel gegenüber der Bohrwerkzeugachse über die gesamte Länge der Rippen erstrecken und im Bereich des rippenfreien Bohrerschafts in den zentralen Versorgungskanal münden. Zur Erleichterung der Herstellung bilden die Kühlmittelkanäle im abgewickelten Zustand der Rippen schräg zur Bohrwerkzeugachse ausgerichtete geradlinige Tieflochbohrungen. Der Schrägwinkel der Tieflochbohrung gegenüber der Bohrwerkzeugachse beträgt in Abhängigkeit vom Durchmesser und von der Länge des Bohrerkörpers zwischen 1° und 8°. Vorteilhafterweise liegen die Achsen der Tieflochbohrungen im abgewickelten Zustand der Rippen in einer durch die Bohrwerkzeugachse verlaufenden Axialebene, wobei die die beiden Tieflochbohrungen enthaltenden Axialebenen einen Winkel ≠ 180° um die Bohrwerkzeugachse einschließen. Der zwischen den Axialebenen eingeschlossene Winkel beträgt zweckmäßig 155° bis 175°. Mit diesen Maßnahmen wird eine stetige Querschnittsveränderung und dadurch eine erhöhte Steifigkeit und eine verbesserte Schwingungsdämpfung erzielt. Auch die Massenverteilung über den Querschnitt kann durch den zwischen den Axialebenen eingeschlossenen Winkel beeinflußt werden. Durch die erfindungsgemäße Ausbildung und Anordnung der Kühlmittelkanäle können über die gesamte Länge des Spanabfuhrteils tiefe Spannuten vorgesehen werden. Die Kühlmittelbohrungen sind strömungsgünstig angeordnet. Die schräge Ausrichtung gegenüber der Bohrwerkzeugachse ergibt eine fliehkraftunterstützte Strömung in Richtung Austrittsstelle.

Zur Herstellung des erfindungsgemäßen Bohrwerkzeugs werden folgende Verfahrensschritte vorgeschlagen:
- ein Grundmaterialkörper wird auf Bohrwerkzeugkontur unter Bildung eines rotationssymmetrischen, abschnittsweise zylindrischen, gegebenenfalls mehrere Stufenpartien mit unterschiedlichem Durchmesser aufweisenden Rohlingkörpers gedreht;
- in einen zylindrischen Abschnitt (Spanabführungspartie) des Rohlingkörpers werden zwei einander gegenüberliegende, nach beiden Seiten axial durch ein Auslaufende begrenzte Spanfördernuten eingeformt oder eingefräst, die an ihren Flanken durch stehenbleibende Längsrippen begrenzt sind;
- am schneidkopfseitigen oder einem schneidkranzseitigen Ende des Rohlingkörpers werden zwei einander an ihren Flanken durch je eine im wesentlichen achsparallele Spanleitfläche und eine Spanführungsfläche begrenzte Spanräume eingeformt oder eingefräst, deren Spanleitfläche und/oder Spanführungsfläche im Bereich des schneidkopf- oder schneidkranzseitigen Auslaufendes oder innerhalb des Schneidkopfes die Flanken der benachbarten Spanfördernut unter Bildung einer Begrenzungskante und einer stufenförmig zurückspringenden Übergangsfläche anschneiden;
- die Spanfördernuten werden zunächst in Form von achsparallelen Längsnuten in den Rohlingkörper oder dessen Stufenpartien eingeformt oder eingefräst,
- vor oder nach dem Form- oder Fräsvorgang werden in den Bereich der geradlinigen Rippen Tieflochbohrungen eingebracht,
- die sich von exzentrisch an der Stirnseite des schneidkopfseitigen oder schneidkranzseitigen Rohlingendes angeordneten Stellen aus schräg zur Zylinderachse des Rohlingkörpers in Richtung zu einer zentralen Sacklochbohrung im rippenfreien Bohrerschaft erstrecken und deren Boden durchdringen,
- der auf diese Weise vorgefertigte Rohling wird an in axialem Abstand voneinander angeordneten Einspannstellen in einer zwischen den Einspannstellen befindlichen berippten Zone auf eine vorgegebene Temperatur erhitzt und an den Einspannstellen mit einem koaxialen Torsionsmoment beaufschlagt und dabei in der erhitzten Zone um einen vorbestimmten Winkel wendelförmig plastisch verdrallt,
- wobei der Verdrallwinkel unter Bildung einer axial kontinuierlich oder stufenweise zunehmenden Wendelsteigung im Bereich der Rippen variiert wird.

Die Spanfördernuten können dabei mittels eines Scheibenfräsers und/oder Gesenkfräsers in den Rohlingkörper eingebracht werden, wobei an den Auslaufenden eine der Torusform des Scheibenfräsers und/oder der Kugelform des Gesenkfräsers entsprechende konkave Übergangsfläche erzeugt wird. Damit können im Querschnitt teilkreisförmige oder eine andere Innenkontur aufweisende Spannuten gefräst werden, die zumindest an der schneidplattenseitigen Nutenflanke zum Nutenrand hin geradlinig auslaufen. Um die Steifigkeit des Bohrerkörpers vor allem in der Nähe seiner Einspannstelle am Bohrerschaft zu erhöhen, wird gemäß einer vorteilhaften Ausgestaltung der Erfindung vorgeschlagen, daß die Längsnuten mit in Spanablaufrichtung abnehmender Tiefe in den zylindrischen Körper eingefräst werden. Um möglichst tiefe, bis in die Nähe der Bohrerachse reichende Nuten einbringen zu können, ist es von Vorteil, wenn die Spanfördernuten zunächst in Form von achsparallelen Längsnuten in den Rohlingkörper eingebracht werden und wenn vor oder nach dem Fräsvorgang in den Bereich der geradlinigen Rippen Tieflochbohrungen eingebracht werden, die sich von exzentrisch an der Stirnseite des schneidkopfseitigen oder schneidkranzseitigen Rohlingendes angeordneten Stellen aus schräg zur Zylinderachse des Rohlingkörpers in Richtung zu einer zentralen Sacklochbohrung im rippenfreien Bohrerschaft erstrecken und deren Boden durchdringen. Der auf diese Weise vorgefertigte Rohling kann an in axialem Abstand voneinander angeordneten Einspannstellen in einer zwischen den Einspannstellen befindlichen berippten Zone auf eine vorgegebene Temperatur erhitzt und an den Einspannstellen mit einem koaxialen Torsionsmoment beaufschlagt und dabei in der erhitzten Zone um einen vorbestimmten Winkel wendelförmig verdrallt werden.

Gemäß einer bevorzugten Ausgestaltung der Erfindung wird der Rohling im Bereich zwischen den Einspannstellen mit kontinuierlich oder stufenweise axial wandernder Erhitzungszone verdrallt. Dadurch kann der Verdrallwinkel unter Bildung einer axial veränderlichen Wendelsteigung variiert werden.

Eine weitere bevorzugte Ausgestaltung der Erfindung sieht vor, daß zumindest in die schneidplattenseitigen Nutenflanken in axialem Abstand voneinander angeordnete, durch im wesentlichen radiale Ränder begrenzte Stufen- oder Wellenflächen vorzugsweise mittels eines Gesenkfräsers eingefräst werden. Es ist dabei vorteilhaft, wenn dies vor dem wendelförmigen Verdrallen des betreffenden Rohlingkörpers erfolgt.

Im folgenden wird die Erfindung anhand der Zeichnung näher erläutert. Es zeigen
- Fig. 1: eine Seitenansicht eines Bohrwerkzeugs mit Wendeschneidplatten und gewendelten Kühlmittelkanälen;
- Fig. 2a bis d: vier um jeweils 90' gegeneinander verdrehte Seitenansichten des Schneidkopfs in vergrößerter Darstellung;
- Fig. 2e: einen Schnitt entlang der Schnittlinie E-E der Fig. 2b;
- Fig. 3: eine Draufsicht auf den Schneidkopf;
- Fig. 4: einen Schnitt entlang der Schnittlinie IV-IV der Fig. 3;
- Fig. 5: einen Längsschnitt durch einen Rohling zur Herstellung des Bohrwerkzeugs nach Fig. 1 bis 4;
- Fig. 6a bis h: ein Schema des Verfahrensablaufs bei der Herstellung des Bohrwerkzeugs;
- Fig. 7a bis c: zwei Seitenansichten und eine Schnittdarstellung eines Bohrwerkzeugs mit gewendelten und in Spanablaufrichtung gewellten Spanfördernuten;
- Fig. 8a bis c: einen Stufenbohrer in Darstellungen entsprechend Fig. 7a bis c;
- Fig. 9a und b: einen Ausschnitt aus den schneidplattenseitigen Flanken der Spanfördernuten mit Stufenflächen und Wellenflächen in in Richtung Spanabfluß geschnittener vergrößerter Darstellung;
- Fig. 10a bis h: Ausschnitte aus der Spanfördernut mit verschieden gestalteten Randumrissen der Stufen- oder Wellenflächen.

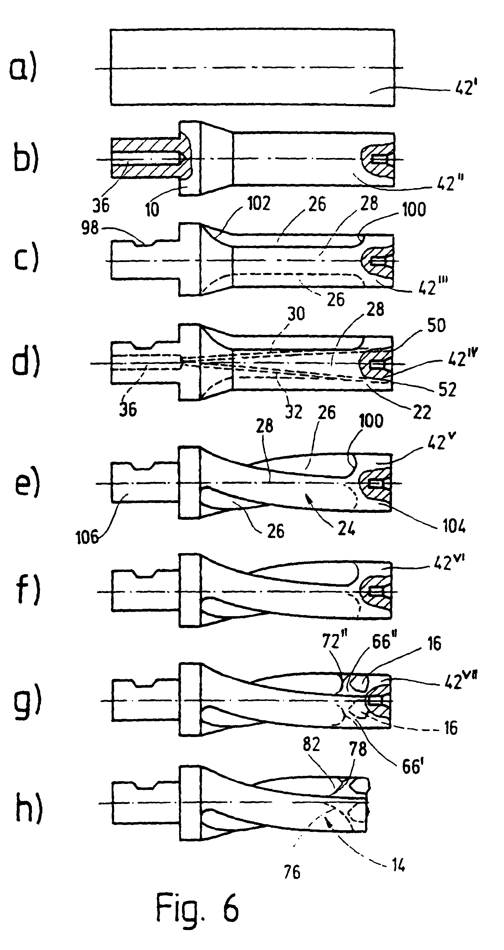

Das Bohrwerkzeug besteht im wesentlichen aus einem an einem nicht dargestellten Werkzeughalter einspannbaren, einen als Anschlag für den Werkzeughalter ausgebildeten Bund 10 aufweisenden Bohrerschaft 12 und einem Bohrerkörper 14, der einen stirnseitigen, mit Ausnehmungen 16 für eine radial innere Wendeschneidplatte 18 und eine radial äußere Wendeschneidplatte 20 versehenen Schneidkopf 22 und eine sich zwischen dem Schneidkopf 22 und dem Bund 10 erstreckende gewendelte Spanabfuhrpartie 24 aufweist. Die Spanabfuhrpartie weist zwei einander gegenüberliegende Spanfördernuten 26 auf, die an ihren Flanken durch zwei wendelförmig gekrümmte Rippen 28 begrenzt sind. Weiter sind in der Spanabfuhrpartie 24 zwei Kühlmittelkanäle 30,32 angeordnet, die mit der gleichen Krümmung wie die Rippen 28 wendelförmig gekrümmt sind, sich mit konstantem Schrägwinkel β gegenüber der Bohrerachse 34 entlang den Rippen über die gesamte spiralige Spanabfuhrpartie 24 erstrecken und im Bereich des Bundes 10 in einen gemeinsamen, achszentralen Versorgungskanal 36 im Bohrerschaft 12 münden. Der zentrale Versorgungskanal 36 erstreckt sich innerhalb des Bohrerschafts 12 bis in den Bereich des verdickten Bundes 10. Sein Strömungsquerschnitt ist mindestens doppelt so groß wie derjenige der Kühlmittelkanäle 30, 32. Wie insbesondere aus Fig. 5 zu ersehen ist, münden die Kühlmittelkanäle 30,32 an radial gegeneinander versetzten Übergangsstellen 37 in den Versorgungskanal 36. Im gestreckten Rohlingzustand (Fig. 5) der Rippen 28 liegen die Achsen 38,40 der die Kühlmittelkanäle bildenden Tieflochbohrungen 30,32 in je einer durch die Bohrungs-bzw. Rohlingsachse 34 verlaufenden Axialebene, die einen Winkel α ≠ 180° um die Bohrerachse 34 einschließen (vgl. Fig. 4).

Der bei dem gezeigten Ausführungsbeispiel einstückig mit dem Bohrerkörper 14 verbundene Schneidkopf 22 weist zwei in Umfangsrichtung durch achsparallel ausgerichtete Spanräume 60', 60'' voneinander getrennte Segmentpartien 62 auf, die radial nach außen durch teilzylindrische Umfangsflächen 64 begrenzt sind. Im Bereich der achsparallelen, radialen Spanleitflächen 66',66'' der Spanräume 60',60'' sind die Wendeschneidplatten 18,20 angeordnet, deren Spanflächen 68',68'' bei dem gezeigten Ausführungsbeispiel mit der betreffenden Spanleitfläche 66', 66'' fluchten und deren wirksame Schneidkanten 70', 70'' stirnseitig über den Bohrkopf 22 überstehen. Die Schneidkante 70'' der äußeren Schneidplatte 20 steht etwas über die Umfangsfläche 64 der betreffenden Segmentpartie 62 radial über und bestimmt den Bohrungsdurchmesser.

Die Spanräume 60',60'' des Bohrkopfs 22 weisen zusätzlich eine der schneidplattenseitigen Spanleitfläche 66',66'' gegenüberliegende, an der benachbarten Segmentpartie 62 angeordnete schneidplattengegenseitige Spanführungsfläche 72',72'' auf.

Die Spanleitflächen 66',66'' enden in Spanablaufrichtung 74 an einer als Freikante ausgebildeten Begrenzungskante 76 von der aus sich jeweils eine stufenförmig zurückspringende Übergangsfläche 80 anschließt, die unter Erweiterung des Spanraumquerschnitts mit konkaver Krümmung in die benachbarten Flanken 84 der Spanfördernuten 26 münden.

In die Spanführungsflächen 72',72'' ist jeweils eine bis in die Nähe der stirnseitigen Spitze des Bohrerkörpers 14 reichende Vertiefung 79 beispielsweise mittels eines Schaftfräsers eingebracht, die an ihrer stirnseitigen Begrenzungskante 78 eine stufenförmig zurückspringende Übergangsfläche 82 mit konkaver Krümmung aufweist, und die in Spanablaufrichtung glatt in die benachbarten Flanken 86 der Spanfördernut 26 mündet. Die Begrenzungskante 78 reicht in den Bereich zwischen der wirksamen Schneidkante 70',70'' und der Mitte der benachbarten Schneidplatte 18,20, so daß die Querschnittsfläche des Spanraums 60',60'' von der Spitze des Schneidkopfes 22 aus zur Spanfördernut 26 stetig zunimmt.

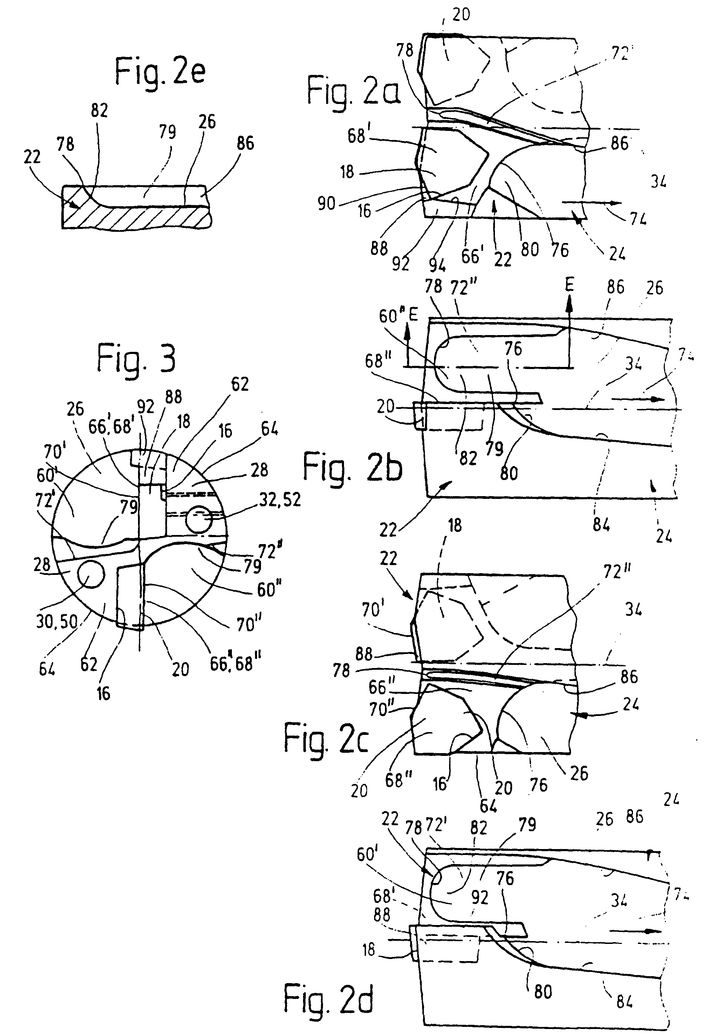

Wie insbesondere aus Fig. 2a,c,d und 3 zu ersehen ist, ist im Bereich der zur inneren Schneidplatte gehörenden Spanleitfläche 66' ein Spanflächenabschnitt 88 vorgesehen, der den innerhalb der einander überlappenden Arbeitsbereiche der Schneidplatten 18,20 liegenden, radial außen liegenden Schneidkantenteil 90 der inneren Schneidplatte 18 übergreift. Dadurch wird verhindert, daß durch den beim Bohren gebildeten Zwickel zwischen dem Schneidkantenteil 90 und der Bohrung Späne in den Bereich der Umfangsflächen 64 abgedrängt werden können. Zusätzlich ist im Bereich der Spanleitfläche 66' eine sich von der Schneidkopfspitze bis in die Nähe der Übergangsstelle erstreckende Spanleitflächenbegrenzung 92 vorgesehen, die über die Ebene der Spanfläche 68' der Schneidplatte 18 in Richtung Spanraum 60' im Radial- und Axialschnitt stufenartig oder keilförmig über die Ebene der Spanfläche 68' der Schneidplatte 18 übersteht (Fig. 2d und 3). Wie aus Fig. 2a zu ersehen ist, verläuft die Spanleitflächenbegrenzung 92 in Spanlaufrichtung unter Erweiterung des Spanraums 60' mit ihrer Innenkante 94 schräg nach außen.

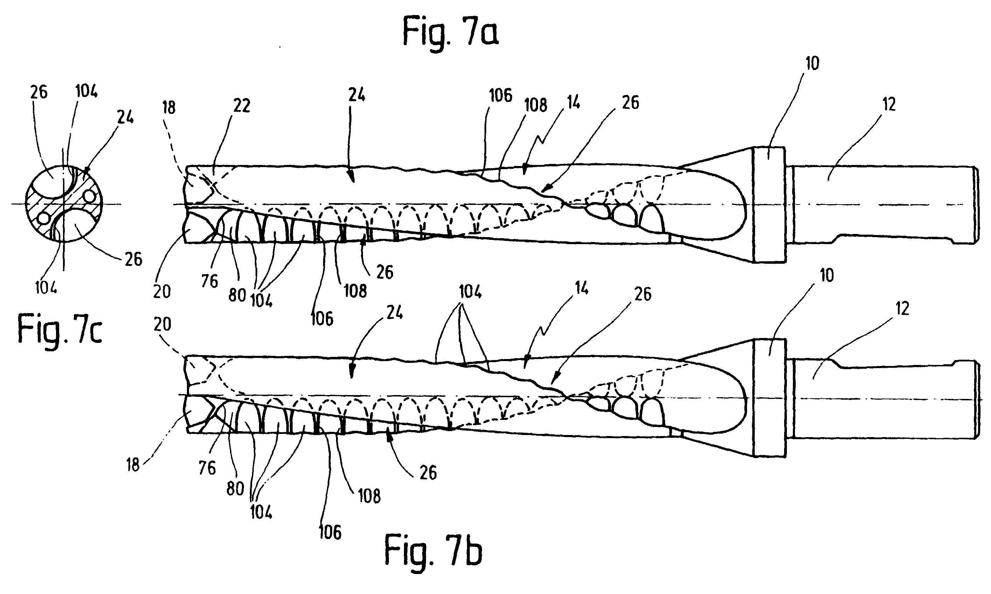

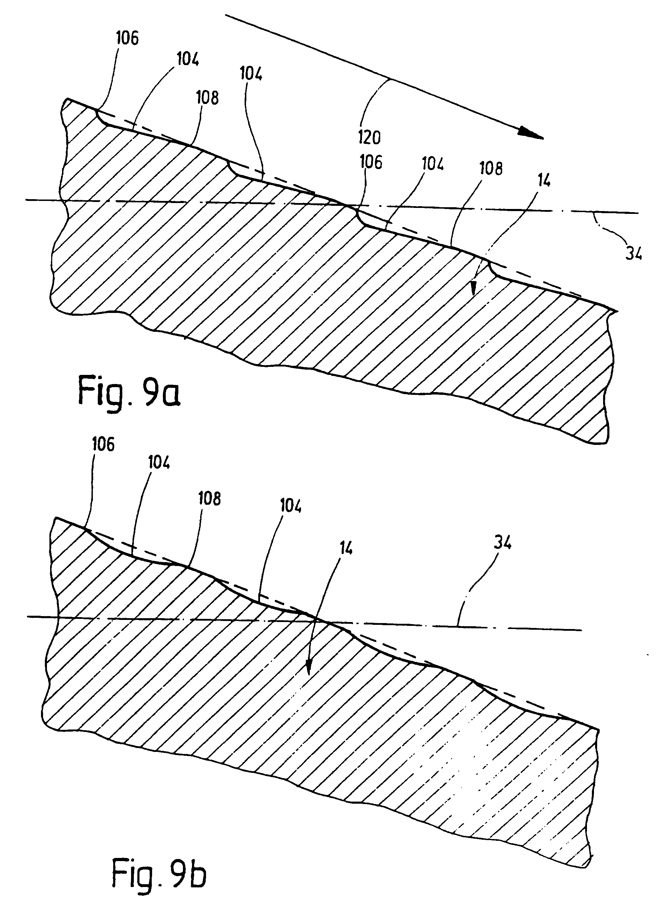

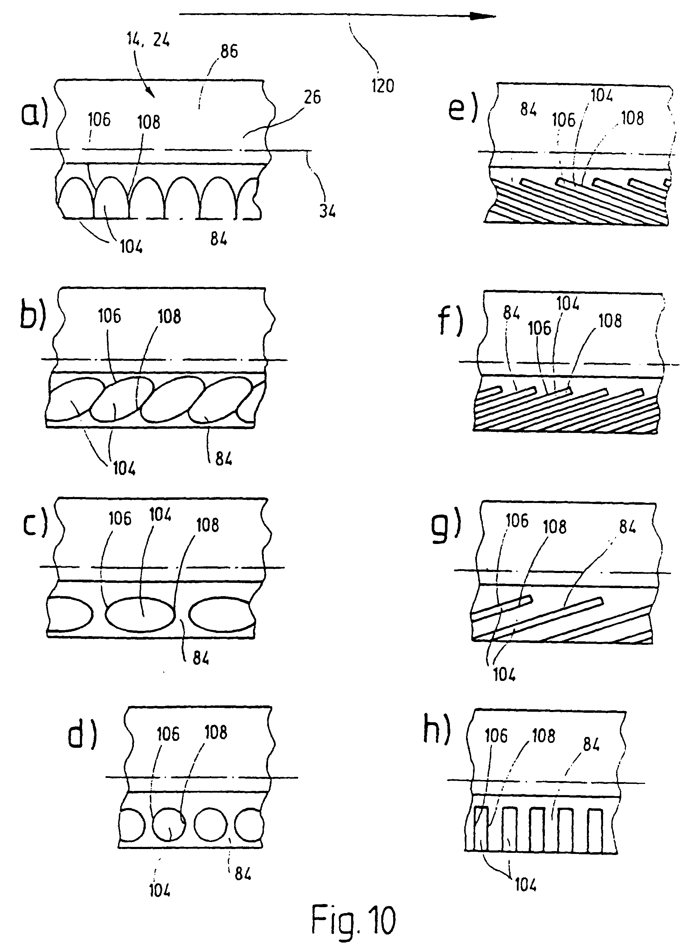

Bei den in Fig. 7 bis 10 gezeigten Ausführungsbeispielen sind in den schneidplattenseitigen Flanken 84 der Spanfördernuten 26 in axialem Abstand voneinander angeordnete Stufen- oder Wellenflächen 104 vorgesehen, die an ihren Enden durch im wesentlichen radial (Fig. 7, 8, 10a, h) oder schräg zur Bohrerachse 34 (Fig. 10b, e, f, g) verlaufende Ränder 106,108 begrenzt sind. Die Stufen- und Wellenflächen 104 springen von den schneidkopfseitigen Rändern 106 aus in Spanablaufrichtung 120 unter lokaler Querschnittserweiterung zurück und weisen einen in der Spanablaufrichtung bezüglich der Wendelsteigung der betreffenden Nutenflanke 84 zunächst zunehmenden und sodann abnehmenden Steigungswinkel auf (vgl. Fig. 9a und b).

Bei den in Fig. 10a bis h gezeigten Ausführungsbeispielen sind die Stufen- oder Wellenflächen 104 durch an ihren Rändern 106,108 geschlossene (Fig. 10b, c, d) oder radial nach außen hin randoffene (Fig. 10a, e bis h) Vertiefungen in den schneidplattenseitigen Flanken 84 der Spanfördernuten 26 gebildet. Die Vertiefungen können dabei an ihren Stufen- oder Wellenrändern 106, 108 beispielsweise einen ovalen (Fig. 10a, b, c), kreisrunden (Fig. 10d) oder rechteckigen (Fig. 10e bis h) Umriß aufweisen. Sie können im Abstand voneinander angeordnet sein (Fig. 10c bis h) oder im Bereich ihrer Ränder 106 und 108 unmittelbar aneinander anschließen (Fig. 10a) oder einander überschneiden (Fig. 10b).

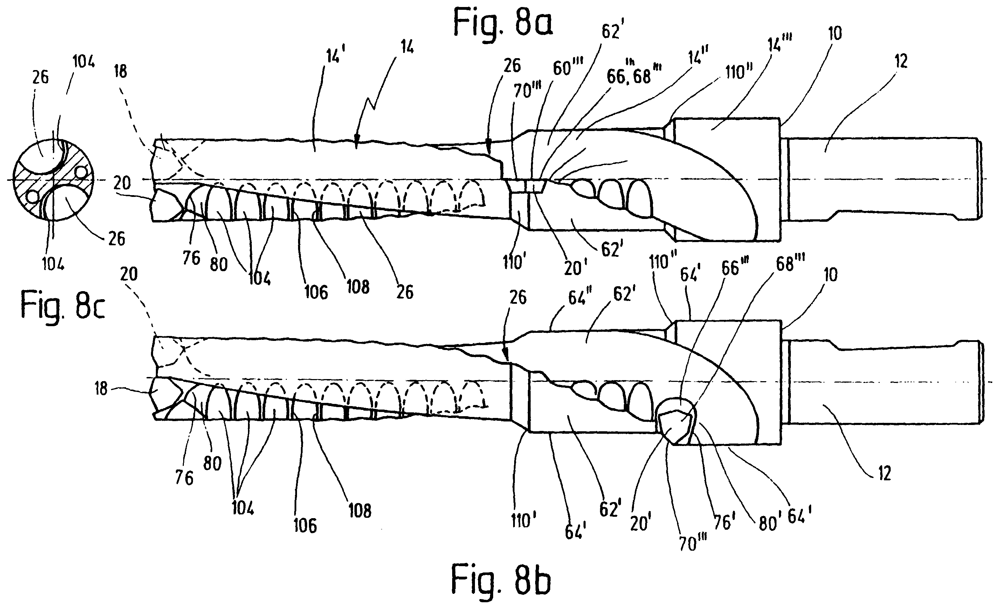

Bei dem in Fig. 8a bis c gezeigten Ausführungsbeispiel ist das Bohrwerkzeug als Stufenbohrer ausgebildet. Der Bohrerkörper 14 weist dort insgesamt drei durch Schneidkränze 110', 110'' axial voneinander getrennte Stufenpartien 14',14'', 14''' mit in Spanablaufrichtung stufenförmig zunehmendem Durchmesser auf. Die Schneidkränze 110',110'' weisen zwei radial nach außen durch teilzylindrische Umfangsflächen 64', 64'' begrenzte und durch in Umfangsrichtung angrenzende, im wesentlichen achsparallel ausgerichtete, sowohl in Vorschubrichtung als auch in Spanablaufrichtung in die benachbarten Spanfördernuten 26 mündende Spanräume 60''' voneinander getrennte Segmentpartien 62' und je eine in einer Ausnehmung einer Segmentpartie im Bereich einer im wesentlichen achsparallelen radialen Spanleitfläche 66''' mit zu dieser fluchtender Spanfläche 68''' angeordnete Schneidplatte 20' auf, die eine axial über den Schneidkranz 110',110'' überstehende wirksame Schneidkante 70''' enthält. Die betreffende Spanleitfläche 66''' geht an einer Übergangsstelle in Spanablaufrichtung in eine wendelförmig gekrümmte Flanke der benachbarten Spanfördernut 26 über. An der Übergangsstelle ist dabei eine in Spanablaufrichtung von einer Begrenzungskante 76' der Spanleitfläche 66''' aus unter Querschnittserweiterung des Spanraums stufenförmig zurückspringende, in die eine Flanke 84 der benachbarten Spanfördernut 26 übergehende Übergangsfläche 80 angeordnet.

Wie aus dem in Fig. 6 gezeigten Schema zu ersehen ist, erfolgt die Herstellung des Bohrwerkzeugs in folgenden Arbeitsschritten:

Der zylindrische Grundmaterialkörper 42' wird in einer Drehmaschine auf Bohrerkontur gedreht und mit dem Kegelübergang zum Bund 10 versehen. Noch in der Drehmaschine wird die den Versorgungskanal 36 bildende Zentralbohrung von der Schaftseite aus bis in den Bereich des Bundes 10 eingebracht (Rohling 42'').

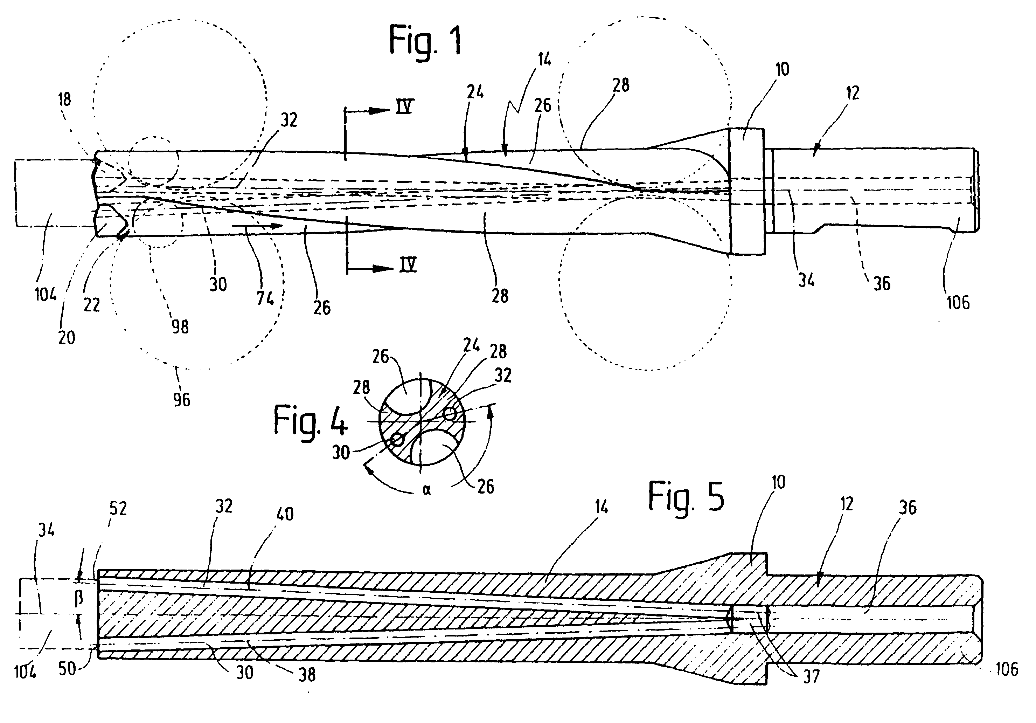

Sodann wird der so vorbereitete Rohling 42'' in ein Fräszentrum eingespannt, in welchen mit Hilfe eines Scheibenfräsers 96 und eines Gesenkfräsers 98 (s. Fig. 1) die einander gegenüberliegenden Spannuten 26 unter Stehenlassen der Längsrippen 28 eingebracht werden. Die Spannuten erhalten dabei einen im Querschnitt kreisförmiges Profil mit kugelförmigen bzw. torusförmigen Auslaufenden 100,102. Im Fräszentrum wird außerdem die Spannfläche 98 in den Bohrerschaft eingefräst (Rohling 42'''). Im Falle der Ausführungsbeispiele nach Fig. 7 und 8 können im Fräszentrum außerdem die Stufen- oder Wellenflächen 104 mit Hilfe eines Gesenkfräsers in die schneidplattenseitigen Flanken der Spannuten 26 eingebracht werden.

Der auf diese Weise vorbereitete Rohling 42''' wird in der gleichen Einspannung oder in einer getrennten Bohrstation mit Tieflochbohrungen 30,32 versehen, die von den stirnseitigen Austrittsstellen 50,52 im Bohrkopf 22 aus schräg durch die Längsrippen 28 bis zum Versorgungskanal 36 hindurchgreifen (Rohling 42^{IV}).

Der auf diese Weise vorgefertigte Rohling 42^{IV} wird in einer Verdrallstation an seinen beiden Enden 104,106 eingespannt und mit Hilfe einer entlang der Spanabfuhrpartie 24 des Bohrerkörpers 14 verschiebbaren Induktionsspule zonenweise aufgeheizt und über die Einspannstellen mit einem koaxialen Torsionsmoment beaufschlagt. Dabei wird die Spanabfuhrpartie 24 einschließlich der Bohrungen 30,32 sukzessiv wendelförmig verdrallt, wobei der Wendelwinkel während des Verdrallungsvorgangs variiert werden kann. Durch ein hinter der Induktionsspule angeordnetes Kühlgebläse wird gewährleistet, daß die zuvor verdrallten Abschnitte der Spanabfuhrpartie beim weiteren Verdrallungsvorgang verfestigt werden (Rohling 42^{V}).

Um die beim Verdrallungsvorgang aufgetretenen Maßfehler zu kompensieren, wird der Rohling 42^{V} unter Bildung des Rohlings 42^{VI} in einer Drehmaschine nochmals überdreht.

In einer Schlußbearbeitungsstation werden Spanleitflächen 66',66'', Spanführungsflächen 72',72'' und die Plattensitze 16 gefräst (Rohling 42^{VII}). Schließlich wird unter Bildung des fertigen Bohrerkörpers 14 die Kopfform gefräst.

Zusammenfassend ist folgendes festzustellen: Die Erfindung bezieht sich auf ein Bohrwerkzeug für Werkzeugmaschinen. Das Bohrwerkzeug weist einen Bohrerkörper 14 mit zwei an ihren Flanken durch wendelförmig gekrümmte Rippen 28 begrenzten Spanfördernuten 26 auf. Am Bohrerkörper 14 ist stirnseitig ein Schneidkopf 22 angeordnet, der zwei durch einander gegenüberliegende, axial ausgerichtete Spanräume 60',60'' voneinander getrennte Segmentpartien 62 und zwei in unterschiedlichen radialen Abständen von der Bohrerachse 34 mit einander teilweise überlappenden Arbeitsbereichen in je einer Ausnehmung 16 der Segmentpartien im Bereich einer achsparallelen radialen Spanleitfläche 66',66'' angeordnete Schneidplatten 18,20 aufweist. Die Spanleitflächen 66', 66'' gehen an einer Übergangsstelle in die Flanken 84 der benachbarten Spanfördernuten 26 über, wobei an mindestens einer der Übergangsstellen eine unter Querschnittserweiterung des Spanraums 66', 66'' stufenförmig zurückspringende, in eine Flanke der benachbarten Spanfördernut 26 übergehende Übergangsfläche 80 angeordnet ist.

## Patentansprüche

1. Bohrwerkzeug für Werkzeugmaschinen mit einem Bohrerkörper (14), der mindestens zwei an ihren Flanken (84, 26) durch wendelförmig gekrümmte Rippen (28) begrenzte Spanfördernuten (26) aufweist, und mit einem stirnseitig am Bohrerkörper (14) angeordneten Schneidkopf (22), der mindestens zwei radial nach außen durch teilzylindrische Umfangsflächen (64) begrenzte und durch in Umfangsrichtung angrenzende, im wesentlichen achsparallel ausgerichtete, in Spanablaufrichtung (74) in die benachbarten Spanfördernuten (26) mündende Spanräume (60', 60'') voneinander getrennte Segmentpartien (62) und mindestens zwei in je einer Ausnehmung (16) der Segmentpartien (62) im Bereich einer im wesentlichen achsparallelen radialen Spanleitfläche (66',66'') vorzugsweise mit zu dieser fluchtender Spanfläche (68', 68'') angeordnete, jeweils mindestens eine axial über den Schneidkopf (22) überstehende wirksame Schneidkante (70', 70'') enthaltende Schneidplatten (18,20) aufweist, wobei die Spanleitflächen (66', 66'') jeweils an einer Übergangsstelle (76) in Spanablaufrichtung (74) in eine wendelförmig gekrümmte Flanke (84) der benachbarten Spanfördernuten (26) übergehen, wobei der Bohrerkörper (14) an seinem dem Schneidkopf abgewandten Ende einen rippenfreien, einen zentralen Kühlmittel-Versorgungskanal (36) enthaltenden Bohrerschaft (12) aufweist, und wobei in den Rippen (28) des Bohrerkörpers Kühlmittelkanäle (30, 32) angeordnet sind, **dadurch gekennzeichnet, daß** die Kühlmittelkanäle (30, 32) mit der gleichen Krümmung wie die Rippen (28) wendelförmig gekrümmt sind und sich vom Schneidkopf aus mit konstantem, Schrägwinkel (β) gegenüber der Bohrwerkzeugachse (34) über die gesamte Länge der Rippen (28) erstrecken, so daß sie im Bereich des rippenfreien Bohrerschafts (12) in den zentralen Versorgungskanal (36) münden.

2. Bohrwerkzeug nach Anspruch 1, **dadurch gekennzeichnet, daß** an mindestens einer der Übergangsstellen (76) eine in Spanablaufrichtung (74) von einer Begrenzungskante (76) der Spanleitfläche (66', 66'') aus unter Querschnittserweiterung des Spanraums (60',60") stufenförmig zurückspringende, in die eine Flanke (84) der benachbarten Spanfördernut (26) übergehende Übergangsfläche (80) angeordnet ist, daß die Spanräume (60',60'') eine der schneidplattenseitigen Spanleitfläche (66',66'') gegenüberliegende, im Querschnitt durch den Spanraum einen Winkel von 0° bis 110° mit dieser einschließende, an der benachbarten Segmentpartie (62) angeordnete Spanführungsfläche (72', 72'') aufweisen, die an mindestens einer der Übergangsstellen eine in Spanablaufrichtung (74) von einer Begrenzungskante (78) der Spanführungsfläche (72', 72'') aus unter Querschnittserweiterung des Spanraums (60', 60'') stufenförmig zurückspringende, in die eine Flanke (86) der benachbarten Spanfördernut (26) übergehende Übergangsfläche (82) aufweisen, welche Begrenzungskante (78) in den Bereich zwischen der wirksamen Schneidkante (70', 70'') und der Mitte der benachbarten Schneidplatte (18, 20) reicht, so daß die Querschnittsfläche des Spanraums (60', 60'') von der Spitze des Schneidkopfes (22) aus zur Spanfördernut (26) stetig zunimmt.

3. Bohrwerzeug nach Anspruch 1 oder 2, **dadurch gekennzeichnet, daß** die Wendelsteigung der Spanfördernuten und damit auch die Weite der Spanfördernuten in Spanablaufrichtung kontinuierlich oder stufenförmig zunimmt.

4. Bohrwerkzeug nach einem der Ansprüche 1 bis 3, **dadurch gekennzeichnet, daß** zumindest ein Teil der Schneidplatten (18, 20) unterschiedliche radiale Abstände von der Bohrwerkzeugachse (34) und einander teilweise überlappende Arbeitsbereiche aufweisen.

5. Bohrwerkzeug nach einem der Ansprüche 1 bis 4, **dadurch gekennzeichnet, daß** die Schneidkante (70'') mindestens einer äußersten Schneidplatte (20) radial über die betreffende teilzylindrische Umfangsfläche (64) übersteht.

6. Bohrwerkzeug nach einem der Ansprüche 1 bis 5, **dadurch gekennzeichnet, daß** der Bohrerkörper (14) mindestens zwei durch einen Schneidkranz (110', 100'') axial voneinander getrennte Stufenpartien (14',14'',14''') mit in Spanablaufrichtung (74) stufenförmig zunehmendem Durchmesser aufweist, daß der Schneidkranz (110',110'') zwei radial nach außen durch teilzylindrische Umfangsflächen (64', 64'') begrenzte und durch in Umfangsrichtung angrenzende, im wesentlichen achsparallel ausgerichtete, sowohl in Vorschubrichtung als auch in Spanablaufrichtung in die benachbarten Spanfördernuten (26) mündende Spanräume (60''') voneinander getrennte Segmentpartien (62') und mindestens eine in einer Ausnehmung einer der Segmentpartien (62') im Bereich einer im wesentlichen achsparallelen radialen Spanleitfläche (66''') vorzugsweise mit zu dieser fluchtender Spanfläche (68''') angeordnete, mindestens eine axial über den Schneidkranz (110',110'') überstehende wirksame Schneidkante (70''') enthaltende Schneidplatte (20') aufweist, wobei die betreffende Spanleitfläche (66''') an einer Übergangsstelle in Spanablaufrichtung (74) in eine wendelförmig gekrümmte Flanke (84) der benachbarten Spanfördernut (26) übergeht, und wobei an der Übergangsstelle eine in Spanablaufrichtung (74) von einer Begrenzungskante (76') der Spanleitfläche (66''') aus unter Querschnittserweiterung des Spanraums (60''') stufenförmig zurückspringende, in die eine Flanke (84) der benachbarten Spanfördernut übergehende Übergangsfläche (80') angeordnet ist.

7. Bohrwerkzeug nach einem der Ansprüche 2 bis 6, **dadurch gekennzeichnet, daß** die Übergangsflächen (80, 82) konkav gekrümmt sind.

8. Bohrwerkzeug nach einem der Ansprüche 2 bis 7, **dadurch gekennzeichnet, daß** die Übergangsfläche (80, 82) glatt in die eine Flanke (84, 86) der Spanfördernut (26) übergeht.

9. Bohrwerkzeug nach einem der Ansprüche 2 bis 8, **dadurch gekennzeichnet, daß** die Übergangsfläche (80, 82) sich über die gesamte Breite der Spanleitfläche (60', 60'') und/oder der Spanführungsfläche (72', 72'') erstreckt.

10. Bohrwerkzeug nach einem der Ansprüche 2 bis 9, **dadurch gekennzeichnet, daß** die Flanken (84, 86) der Spanfördernuten (26) in der Nähe ihrer Außenränder im Querschnitt einen Winkel von weniger als 90°, vorzugsweise von 0° bis 30° einschließen.

11. Bohrwerkzeug nach einem der Ansprüche 1 bis 10, **dadurch gekennzeichnet, daß** die Spanfördernuten (26) eine im Querschnitt teilkreisförmige, vorzugsweise halbkreisförmige Kontur aufweisen.

12. Bohrwerkzeug nach Anspruch 11, **dadurch gekennzeichnet, daß** die Querschnittskontur der Spanfördernuten (26) zumindest im Bereich einer Flanke (84, 86) zu deren Außenrand hin geradlinig verläuft.

13. Bohrwerkzeug nach einem der Ansprüche 2 bis 12, **dadurch gekennzeichnet, daß** die vorzugsweise gekrümmte Begrenzungskante (76) vom Rand der Schneidplattenausnehmung (16) einen über die Kantenlänge variablen Abstand aufweist, der an der schmalsten Stelle dem 0,1- bis 0,4-fachen des Schneidplattenumkreisdurchmessers entspricht.

14. Bohrwerkzeug nach einem der Ansprüche 1 bis 13, **dadurch gekennzeichnet, daß** die teilzylindrischen Umfangsflächen (64) der Segmentpartien (62) und die teilzylindrischen Umfangsflächen der in Spanablaufrichtung anschließenden Rippen (28) sich zu einem gemeinsamen, durch die Spanräume (60', 60'') und die Spanfördernuten (26) unterbrochenen Umfangszylinder ergänzen.

15. Bohrwerkzeug nach einem der Ansprüche 4 bis 14, **gekennzeichnet durch** einen Spanleitflächenabschnitt (88), der einen innerhalb der einander überlappenden Arbeitsbereiche liegenden Schneidkantenteil (90) stirnseitig übergreift.

16. Bohrwerkzeug nach Anspruch 15, **dadurch gekennzeichnet, daß** der Spanleitflächenabschnitt (28) einen radial außen liegenden Schneidkantenteil (90) einer radial innersten Schneidplatte (18) stirnseitig übergreift.

17. Bohrwerkzeug nach Anspruch 15 oder 16, **dadurch gekennzeichnet, daß** der Spanleitflächenabschnitt einen radial innen liegenden Schneidkantenteil einer radial äußersten Schneidplatte (20) stirnseitig übergreift.

18. Bohrwerkzeug nach einem der Ansprüche 1 bis 17, **gekennzeichnet durch** eine an die teilzylindrische Umfangsfläche einer Segmentpartie (62) anschließende, sich von der Schneidkopfspitze in Richtung Übergangsstelle (76) erstreckende Spanleitflächenbegrenzung (92), die über die Ebene der Spanfläche (68') einer gegenüber dem Umfang radial nach innen versetzten Schneidplatte (18) in Richtung Spanraum (60') übersteht.

19. Bohrwerkzeug nach Anspruch 18, **dadurch gekennzeichnet, daß** die Spanleitflächenbegrenzung (92) im Radialschnitt und/oder im Axialschnitt stufenartig oder keilförmig über die Ebene der Spanfläche (68') übersteht.

20. Bohrwerkzeug nach einem der Ansprüche 17 bis 19, **dadurch gekennzeichnet, daß** die Spanleitflächenbegrenzung (92) in Spanablaufrichtung (74) unter Erweiterung des Spanraums (60') divergiert.

21. Bohrwerkzeug nach einem der Ansprüche 1 bis 20, **dadurch gekennzeichnet, daß** zumindest in der schneidplattenseitigen Flanke (84) der Spanfördernuten (26) in axialem Abstand mehrere von einem radial oder schräg zur Bohrwerkzeugachse (34) verlaufenden Stufen- oder Wellenrand (106) aus in Spanablaufrichtung (74) unter lokaler Querschnittserweiterung der Spanfördernut (26) zurückspringende Stufen- oder Wellenflächen (104) angeordnet sind.

22. Bohrwerkzeug nach Anspruch 21, **dadurch gekennzeichnet, daß** die einzelnen Stufen- oder Wellenflächen (104) an ihrem spanablaufseitigen Ende durch einen weiteren radial oder schräg zur Bohrwerkzeugachse (34) verlaufenden Stufen- oder Wellenrand (108) begrenzt sind, wobei die einzelnen Stufen- oder Wellenflächen (104) einen in der Spanablaufrichtung (74) bezüglich der Wendelsteigung der betreffenden Nutenflanke (84) zunächst zunehmenden und sodann abnehmenden Steigungswinkel aufweisen.

23. Bohrwerkzeug nach Anspruch 21 oder 22, **dadurch gekennzeichnet, daß** die Stufen- oder Wellenflächen (104) durch an ihren Stufen- oder Wellenrändern (106,108) geschlossene oder radial nach außen hin randoffene Vertiefungen in den schneidplattenseitigen Flanken (84) der Spanfördernuten (26) gebildet sind.

24. Bohrwerkzeug nach Anspruch 23, **dadurch gekennzeichnet, daß** die Vertiefungen an ihren Stufen- oder Wellenrändern (106, 108) einen gegebenenfalls randoffenen ovalen oder kreisförmigen Umriß aufweisen.

25. Bohrwerkzeug nach Anspruch 23, **dadurch gekennzeichnet, daß** die Vertiefungen an ihren Stufen- oder Wellenrändern (106,108) einen gegebenenfalls randoffenen rechteckigen Umriß aufweisen.

26. Bohrwerkzeug nach einem der Ansprüche 1 bis 25, **dadurch gekennzeichnet, daß** die Kühlmittelkanäle (30, 32) in abgewickeltem Zustand der Rippen (28) schräg zur Bohrwerkzeugachse (34) ausgerichtete geradlinige Tieflochbohrungen bilden.

27. Bohrwerkzeug nach Anspruch 26, **dadurch gekennzeichnet, daß** die Tieflochbohrungen (30, 32) in einer durch die Bohrwerkzeugachse (34) verlaufenden Axialebene liegen, wobei die die beiden Tieflochbohrungen enthaltenden Axialebenen einen Winkel (α) ungleich 180° um die Bohrwerkzeugachse (34) einschließen.

28. Bohrwerkzeug nach Anspruch 27, **dadurch gekennzeichnet, daß** der zwischen den Axialebenen eingeschlossene Winkel (α) 155° bis 175° beträgt.

29. Verfahren zur Herstellung eines Bohrwerkzeugs nach einem der Ansprüche 1 bis 28, **gekennzeichnet durch** folgende Schritte:
- ein Grundmaterialkörper (42') wird auf Bohrwerkzeugkontur unter Bildung eines rotationssymmetrischen, abschnittsweise zylindrischen, gegebenenfalls mehrere Stufenpartien mit unterschiedlichem Durchmesser aufweisenden Rohlingkörpers (42'') gedreht;
- in einen zylindrischen Abschnitt (Spanabführungspartie 24) des Rohlingkörpers (42'') werden zwei einander gegenüberliegende, nach beiden Seiten axial **durch** ein Auslaufende (100, 102) begrenzte Spanfördernuten (26) eingeformt oder eingefräst, die an ihren Flanken (84, 86) **durch** stehenbleibende Längsrippen (28) begrenzt sind;
- am schneidkopfseitigen oder einem schneidkranzseitigen Ende des Rohlingkörpers (42^{VII}) werden zwei einander an ihren Flanken **durch** je eine im wesentlichen achsparallele Spanleitfläche (66', 66") und eine Spanführungsfläche (72', 72'') begrenzte Spanräume (60', 60'') eingeformt oder eingefräst, deren Spanleitfläche (66', 66'') und/oder Spanführungsfläche (72', 72'') im Bereich des schneidkopf- oder schneidkranzseitigen Auslaufendes (100) oder innerhalb des Schneidkopfes die Flanken (84, 86) der benachbarten Spanfördernut (26) unter Bildung einer Begrenzungskante und einer stufenförmig zurückspringenden Übergangsfläche (80, 82) anschneiden;
- die Spanfördernuten (26) werden zunächst in Form von achsparallelen Längsnuten in den Rohlingkörper (42''') oder dessen Stufenpartien eingeformt oder eingefräst,
- vor oder nach dem Form- oder Fräsvorgang werden in den Bereich der geradlinigen Rippen (28) Tieflochbohrungen (30,32) eingebracht,
- die sich von exzentrisch an der Stirnseite des schneidkopfseitigen oder schneidkranzseitigen Rohlingendes angeordneten Stellen aus schräg zur Zylinderachse (34) des Rohlingkörpers (42IV) in Richtung zu einer zentralen Sacklochbohrung (36) im rippenfreien Bohrerschaft (12) erstrecken und deren Boden durchdringen,
- der auf diese Weise vorgefertigte Rohling (42^{V}) wird an in axialem Abstand voneinander angeordneten Einspannstellen (104,106) in einer zwischen den Einspannstellen befindlichen berippten Zone auf eine vorgegebene Temperatur erhitzt und an den Einspannstellen mit einem koaxialen Torsionsmoment beaufschlagt und dabei in der erhitzten Zone um einen vorbestimmten Winkel wendelförmig plastisch verdrallt,
- wobei der Verdrallwinkel unter Bildung einer axial kontinuierlich oder stufenweise zunehmenden Wendelsteigung im Bereich der Rippen (28) variiert wird.

30. Verfahren nach Anspruch 29, **dadurch gekennzeichnet, daß** die Spanfördernuten (26) mittels eines Scheibenfräsers und/oder eines Gesenkfräsers in den Rohlingkörper (42''') eingebracht werden, wobei zunächst an den schneidkopf- oder schneidkranzseitigen Auslaufenden eine der Torusform des Scheibenfräsers und/oder der Kugelform des Gesenkfräsers entsprechende konkave Übergangsfläche (80, 82) erzeugt wird.

31. Verfahren nach Anspruch 29 oder 30, **dadurch gekennzeichnet, daß** eine im Querschnitt teilkreisförmige Spanfördernut (26) gefräst wird, die zumindest an der schneidplattenseitigen Nutenflanke (84) zum Außenrand hin geradlinig ausläuft.

32. Verfahren nach einem der Ansprüche 29 bis 31, **dadurch gekennzeichnet, daß** die Längsnuten (26) mit in Spanablaufrichtung abnehmender Tiefe in den zylindrischen Rohlingkörper (42''') oder dessen Stufenpartien eingefräst werden.

33. Verfahren nach Anspruch 29 bis 32, **dadurch gekennzeichnet, daß** der Rohlingkörper (42^{V}) im Bereich zwischen den Einspannstellen mit kontinuierlich oder stufenweise axial wandernder Erhitzungszone verdrallt wird.

34. Verfahren nach einem der Ansprüche 29 bis 33, **dadurch gekennzeichnet, daß** zumindest in die schneidplattenseitigen Nutenflanken (84) in axialem Abstand voneinander angeordnete, durch im wesentlichen radial verlaufende Ränder (106,108) begrenzte Stufen- oder Wellenflächen (104) vorzugsweise mittels eines Gesenkfräsers eingefräst werden.

## Claims

1. A drill tool for machine tools comprising a drill body (14), having at least two chip transport grooves (26) which are delimited at their flanks (84, 26) by helical ribs (28), and comprising a cutting head (22) which is disposed at the front face side of the drill body (14), which cutting head has at least two segment portions (62) which are radially outwardly delimited by partially cylindrical circumferential surfaces (64) and which are seperated from each other by chip spaces (60', 60") which end in the adjacent chip transport grooves (26) in the direction of chip flow and which are aligned essentially parallel to the tool axis and at least two cutting inserts (18, 20) which are each disposed in a recess (16) of the segment portions (62) in the region of an essentially axially parallel radial chip breaker face (66', 66''), preferably with the face (68', 68'') aligned to this, and which each have at least one active cutting edge (70', 70'') which protrudes axially over the cutting head (22), wherein the chip breaker faces (66', 66'') each end in a helical flank (84) of the adjacent chip transport groove (26) at a transition point (76) in the direction of chip flow (74), wherein the drill body (14) has at its end opposed to the cutting head a ribless drill shank (12) which has a central coolant supply duct (36), and wherein coolant ducts (30, 32) are located in the ribs (28) of the drill body, **characterized in that** the coolant ducts (30, 32) are helically curved with the same curvature as the ribs (28) and which extend from the cutting head over the entire length of the ribs (28) with a constant slant angle (β) with respect to the tool axis (34), so that they end in the central supply duct (36) in the region of the ribless drill shank (12).

2. The drill tool of claim 1, **characterized in that** a transition face (80) is located at at least one of the transition points (76), which transition face recedes step-like from a limiting edge (76) of the chip breaker face (66', 66'') while broadening the cross section of the chip space (60', 60'') and which ends in a flank (84) of the adjacent chip transport groove (26), wherein the chip spaces (60', 60'') have a chip guide face (72', 72'') disposed at the adjacent segment portion (62), which is positioned opposite the chip breaker face (66', 66'') at the side of the cutting insert and which, in a cross section through the chip space, includes an angle of 0° to 110° with the chip breaker face, which chip guide face has a transition face (82) at at least one of the transition points, which transition face recedes step-like in the chip flow direction (74) from a limiting edge (78) of the chip guide face (72', 72'') while broadening the cross section of the chip space (60', 60") and which ends in one flank (86) of the adjacent chip transport groove (26), which limiting edge (78) extends into the region between the active cutting edge (70', 70") and the middle of the adjacent cutting insert (18, 20), so that the cross sectional surface of the chip space (60', 60'') continually increases from the tip of the cutting head (22) to the chip transport groove (26).

3. The drill tool of claim 1 or 2, **characterized in that** the helix pitch of the chip transport grooves and therefore also the width of the chip transport grooves increases continuously or step-like in the chip flow direction.

4. The drill tool of one of claims 1 to 3, **characterized in that** at least some of the cutting inserts (18, 20) are located at different radial distances from the tool axis (34) and have partially overlapping active regions.

5. The drill tool of one of claims 1 to 4, **characterized in that** the cutting edge (70'') of at least one radially most outwardly positioned cutting insert (20) radially protrudes over the corresponding partially cylindrical circumferential surface (64).

6. The drill tool of one of claims 1 to 5, **characterized in that** the drill body (14) comprises at least two staggered portions (14', 14'', 14''') which are axially seperated from one another by a cutting crown (110', 110'') and which have a step-like increasing diameter in the direction of chip flow, that the cutting crown (110', 110") comprises two segment portions (62') which are delimited radially outwardly by partially cylindrical circumferential surfaces (64', 64'') and comprises at least one cutting insert (20') which is disposed in a recess of one of the segment portions (62') in the region of an essentially axially parallel radial chip breaker face (66'''), preferably with its face aligned with respect to this, and which has at least one active cutting edge (70''') axially protruding over the cutting crown (110', 110''), wherein the corresponding chip breaker face (66''') ends at a transition point in the direction of chip flow in a helically curved flank (84) of the adjacent chip transport groove (26), and wherein a transition surface (80') is located at the transition point, which transition surface recedes step-like in the direction of chip flow (74) from a limiting edge (76') of the chip breaker face (66''') while broadening the cross section of the chip space (60''') and ends in one flank (84) of the adjacent chip transport groove.

7. The drill tool of one of claims 2 to 6, **characterized in that** the transition surfaces (80, 82) are curved concavely.

8. The drill tool of one of claims 2 to 7, **characterized in that** the transition surface (80, 82) merges smoothly into one flank (84, 86) of the chip transport groove (26).

9. The drill tool of one of claims 2 to 8, **characterized in that** the transition surface (80, 82) extends over the entire width of the chip breaker face (66', 66'') and/or of the chip guide face (72', 72'').

10. The drill tool of one of claims 2 to 9, **characterized in that** the flanks (84, 86) of the chip transport grooves (26) include in cross section near their outer edges an angle of less than 90°, preferably of 0° to 30°.

11. The drill tool of one of claims 1 to 10, **characterized in that** the chip transport grooves (26) have a contour which is partially circular in cross section, preferably semicircular.

12. The drill tool of claim 11, **characterized in that** the cross section contour of the chip transport grooves (26) extends in a straight line toward their outer edge at least in the region of one flank (84, 86).

13. The drill tool of one of claims 2 to 12, **characterized in that** the preferably curved limiting edge (76) has along the length of its edge a variable distance from the edge of the cutting insert recess, which corresponds to 0.1 to 0.4 times the diameter of the limiting circle of the cutting insert.

14. The drill tool of one of claims 1 to 13, **characterized in that** the partially cylindrical circumferential surfaces (64) of the segment portions (62) and the partially cylindrical circumferential surfaces of the ribs (28) adjoining in the chip flow direction supplement each other to form a common circumferential cylinder interrupted by the chip spaces (60', 60'') and by the chip transport grooves (26).

15. The drill tool of one of claims 4 to 14, **characterized by** a chip breaker face section (88) which extends at the face side past a cutting edge portion (90) which lies within the mutually overlapping active portions.

16. The drill tool of claim 15, **characterized in that** the chip breaker face section (28) extends at the face side past a radially outward positioned cutting edge portion (90) of a radially innermost cutting insert (18).

17. The drill tool of claim 15 or 16, **characterized in that** the chip breaker face section extends at the face side past a radially inward positioned cutting edge portion of a radially outermost cutting insert (20).

18. The drill tool of one of claims 1 to 17, **characterized by** a chip breaker face limit (92) which adjoins the partially cylindrical circumferential surface of a segment portion (62) and extends from the cutting head tip in the direction of the transition point (76) and which extends in the direction of the chip space (60') past the plane of the face (68') of a cutting insert (18) which is displaced radially inwards with respect to the circumference.

19. The drill tool of claim 18, **characterized in that** the chip breaker face limit (92) protrudes step-like or wedge-shaped over the plane of the face (68') in a radial and/or axial section.

20. The drill tool of one of claims 17 to 19, **characterized in that** the chip breaker face limit (92) diverges in the direction of chip flow while broadening the chip space (60').

21. The drill tool of one of claims 1 to 20, **characterized in that** at least in the flank (84) of the chip transport grooves (26) at the cutting insert side a plurality of step surfaces or wave surfaces (104) which recede from a stepped edge or wavy edge (106) extending radially or slanted with respect to the tool axis (34) in the direction of chip flow with a local broadening of the cross section of the chip transport groove (26) are disposed at an axial distance from each other.

22. The drill tool of claim 21, **characterized in that** the individual step surfaces or wave surfaces (104) are delimited at their chip flow sided end by a further stepped edge or wavy edge (108) extending radially or slanted with respect to the tool axis (34), wherein the individual step surfaces or wave surfaces (104) have in the direction of chip travel (74) a gradient which initially increases and then decreases with respect to the helix pitch of the corresponding groove flank (84).

23. The drill tool of claim 21 or 22, **characterized in that** the step surfaces or wave surfaces (104) are formed by depressions in the flanks (84) of the chip transport grooves (26) on the cutting insert side, which depressions are either closed at their stepped edges or wavy edges (106, 108) or open-edged in a radially outwardly direction.

24. The drill tool of claim 23, **characterized in that** the depressions have an oval or circular contour at their stepped edges or wavy edges (106, 108), which contour may be open-edged.

25. The drill tool of claim 23, **characterized in that** the the depressions have a rectangular contour at their stepped edges or wavy edges (106, 108), which contour may be open-edged.

26. The drill tool of one of claims 1 to 25, **characterized in that** the coolant ducts (30, 32) form straight deep-hole bores which extend slanted with respect to the tool axis (34) in a deconvoluted state of the ribs (28).

27. The drill tool of claim 26, **characterized in that** the deep-hole bores (30, 32) lie in an axial plane which extends through the tool axis (34), wherein the axial planes containing the two deep-hole bores include an angle (α) different from 180° about the tool axis (34).

28. The drill tool of claim 27, **characterized in that** the angle (α) included by the axial planes is 155° to 175°.

29. A method for fabricating a drill tool according to one of claims 1 to 28, **characterized by** the following steps:
- a raw material body (42') is machined to the drill tool shape, thereby forming a rotationally symmetrical, in sections cylindrical blank body (42'') which may have a plurality of stepped portions having different diameters;
- two opposing chip transport grooves (26) are formed or milled into a cylindrical section (chip flow portion 24) of the blank body (42'') which are axially delimited to both sides by a runout end (100, 102), which chip transport grooves are delimited at their flanks (84, 86) by remaining longitudinal ribs (28);
- at the end of the blank body (42^{VII}) at the cutting head or cutting crown side two chip spaces (60', 60'') are formed or milled, which are delimited at their flanks by an essentially axially parallel chip breaker face (66', 66") and a chip guide face (72', 72''), the chip breaker face (66', 66") and/or chip guide face (72', 72'') of which cut across the flanks (84, 86) of the adjacent chip transport groove (26) in the region of the runout end (100) at the cutting head or cutting crown side or within the cutting head, thereby forming a limiting edge and a step-like receding transition surface (80, 82);
- The chip transport grooves (26) are formed or milled into the blank body (42'') or its stepped portions initially in the form of axially parallel longitudinal grooves;
- before or after the forming or milling process deep-hole bores (30, 32) are machined into the region of the straight ribs (28),
- which extend slanted with respect to the cylinder axis (34) of the blank body (42^{IV}) from points which are positioned eccentrically on the face of the cutting head or cutting crown side of the blank end in the direction of a central blind bore (36) in the ribless drill shank (12) and penetrate its bottom;
- The blank (42^{V}) prepared in this manner is clamped at bearing points (104, 106) which are axially spaced with respect to each other and heated to a predetermined temperature in a ribbed zone which is located between the bearing points and subjected to a coaxial torsion moment and thereby helically twisted by a predetermined angle in the heated zone;
- wherein the twisting angle is varied in the region of the ribs (28), forming an axially continuous or step-like increasing helical pitch.

30. The method of claim 29, **characterized in that** the chip transport grooves (26) are machined into the blank body (42''') by means of a side milling cutter and/or a cherry, wherein initially a concave transition surface (80, 82) corresponding to the toroidal shape of the side milling cutter and/or the spherical shape of the cherry is created at the runout ends at the cutting head or cutting crown side.

31. The method of claim 29 or 30, **characterized in that** a chip transport groove (26) which is partially circular in cross section is milled, which groove ends in a straight line toward the outer edge at least at the groove flank (84) at the cutting insert side.

32. The method of one of claims 29 to 31, **characterized in that** the longitudinal grooves (26) are milled into the cylindrical blank body (42''') or its stepped portions with a depth which decreases in the direction of chip flow.

33. The method of one of claims 29 to 32, **characterized in that** the blank body (42^{V}) is twisted with a continuously or step-wise displaced heating zone in the region between the bearing points.

34. The method of one of claims 29 to 33, **characterized in that** step surfaces or wave surfaces (104) which are spaced at an axial distance from each other and are delimited by essentially radially extending edges (106, 108) are milled at least into the groove flanks (84) at the cutting insert side, preferably by means of a cherry.

## Revendications

1. Outil d'alésage pour machines-outils, avec un corps de foret (14), qui comporte au moins deux rainures d'entraînement des copeaux (26) limitées au niveau de leurs flancs (84, 26) par des nervures cintrées en spirales (28), et avec une tête tranchante (22) disposée côté frontal sur le corps de foret (14) qui comporte au moins deux parties de segments (62) séparées l'une de l'autre par des logements de copeaux (60', 60") aboutissant à la périphérie, orientés essentiellement parallèlement à l'axe et débouchant dans la direction d'évacuation des copeaux (74) dans les rainures d'entraînement des copeaux voisines (26) et limitées par des surfaces périphériques partiellement cylindriques (64), et au moins deux plaques coupantes (18, 20) disposées chacune dans un creux (16) des parties de segments (62) dans la zone d'une surface conductrice des copeaux radiale essentiellement parallèle à l'axe (66', 66"), de préférence avec une face de coupe alignée avec celle-ci (68', 68"), contenant respectivement au moins un bord tranchant efficace (70', 70") dépassant axialement au-dessus de la tête tranchante (22), les surfaces conductrices des copeaux (66', 66") se changeant ce faisant au niveau d'une zone de transition (76) dans la direction d'évacuation des copeaux (74) en un flanc cintré en spirales (84) des rainures d'entraînement des copeaux voisines (26), le corps de foret (14) comportant au niveau de son extrémité opposée à la tête tranchante, une tige de foret exempte de nervures (12) contenant un canal d'alimentation en liquide de refroidissement central (36), et des canaux de liquide de refroidissement (30, 32) étant à cet égard disposés dans les nervures (28) du corps de foret, **caractérisé en ce que** les canaux de liquide de refroidissement (30, 32) sont cintrés en spirales suivant une courbure identique à celle des nervures (28) et **en ce qu'**ils s'étendent depuis la tête tranchante selon un angle oblique (β) constant par rapport à l'axe de l'outil d'alésage (34) sur toute la longueur des nervures (28), de telle sorte qu'ils débouchent dans le canal d'alimentation central (36) dans la zone de la tige de foret exempte de nervures (12).

2. Outil d'alésage selon la revendication 1, **caractérisé en ce que**, au moins au niveau de l'une des zones de transition (76), une surface de transition (80) est disposée, en retraits par gradins dans la direction d'évacuation des copeaux (74) depuis un bord de limitation (76) de la surface conductrice des copeaux (66', 66") alors que s'élargit la section transversale du logement des copeaux (60', 60"), passant à un flanc (84) de la rainure d'entraînement des copeaux voisine (26), **en ce que** les logements des copeaux (60', 60") comportent une surface de guidage des copeaux (72', 72") disposée sur la partie de segment voisine (62), à l'opposé de la surface conductrice des copeaux côté plaque coupante (66', 66") se raccordant à celle-ci et formant avec celle-ci en section transversale à travers le logement pour copeaux un angle de 0 ° à 110 °, qui, au moins au niveau de l'une des zones de transition, comporte une surface de transition (82) en retraits par gradins dans la direction d'évacuation des copeaux (74) depuis un bord de limitation (78) de la surface de guidage des copeaux (72', 72"), alors que s'élargit la section transversale du logement des copeaux (60', 60") qui passe à un flanc (86) de la rainure d'entraînement des copeaux voisine (26), lequel bord de limitation (78) parvient dans la zone entre le bord tranchant efficace (70', 70") et le centre de la plaque coupante voisine (18, 20), de telle sorte que la surface de section transversale du logement des copeaux (60', 60") augmente constamment depuis la pointe de la tête tranchante (22) jusqu'à la rainure d'entraînement des copeaux (26).

3. Outil d'alésage selon la revendication 1 ou 2, **caractérisé en ce que** le pas des spirales des rainures d'entraînement des copeaux, et de ce fait, la profondeur des rainures d'entraînement des copeaux également, augmente dans la direction d'évacuation des copeaux de façon continue ou échelonnée

4. Outil d'alésage selon l'une des revendications 1 à 3, **caractérisé en ce qu'**au moins une partie des plaques coupantes (18, 20) présente des espacements radiaux différents par rapport à l'axe de l'outil d'alésage (34) et des zones de travail se chevauchant partiellement les unes les autres.

5. Outil d'alésage selon l'une des revendications 1 à 4, **caractérisé en ce que** le bord tranchant (70") d'au moins une plaque coupante la plus extérieure (20) dépasse radialement au-dessus de la surface périphérique partiellement cylindrique concernée (64).

6. Outil d'alésage selon l'une des revendications 1 à 5, **caractérisé en ce que** le corps de foret (14) présente au moins deux parties en gradins (14', 14", 14"') séparées axialement les unes des autres par une couronne de découpe (110', 110") avec un diamètre croissant par échelons dans la direction d'évacuation des copeaux (74), **en ce que** la couronne de découpe (110', 110") comporte deux parties de segments (62') limitées radialement vers l'extérieur par des surfaces périphériques partiellement cylindriques (64', 64") et séparées l'une de l'autre par des logements de copeaux (60''') aboutissant à la périphérie, orientés essentiellement parallèlement à l'axe et débouchant tant dans la direction d'avancement que dans la direction d'évacuation des copeaux dans les rainures d'entraînement des copeaux voisines (26) et comporte, disposée dans un creux de l'une des parties de segment (62') dans la zone d'une surface conductrice des copeaux (66"') radiale essentiellement parallèle à l'axe, de préférence avec une face de coupe (68"') alignée avec celle-ci, au moins une plaque coupante (20'), qui contient au moins un bord tranchant (70"') efficace, dépassant axialement au-dessus de la couronne de découpe (110', 110"), la surface conductrice des copeaux concernée (66''') passant ce faisant au niveau d'une zone de transition dans la direction d'évacuation des copeaux (74) à un flanc cintré en spirales (84) de la rainure d'entraînement des copeaux voisine (26) et, au niveau de la zone de transition, une surface de transition (80') étant ce faisant disposée en retraits par gradins depuis un bord de limitation (76') de la surface conductrice des copeaux (66'''), avec élargissement de la section transversale du logement des copeaux (60"'), et passant au flanc (84) de la rainure d'entraînement des copeaux voisine.

7. Outil d'alésage selon l'une des revendications 2 à 6, **caractérisé en ce que** les surfaces de transition (80, 82) sont cintrées de façon concave.

8. Outil d'alésage selon l'une des revendications 2 à 7, **caractérisé en ce que** les surfaces de transition (80, 82) passent de façon régulière au flanc (84, 86) de la rainure d'entraînement des copeaux (26).

9. Outil d'alésage selon l'une des revendications 2 à 8, **caractérisé en ce que** la surface de transition (80, 82) s'étend sur toute la largeur de la surface conductrice des copeaux (60', 60") et/ou de la surface de guidage des copeaux (72', 72").

10. Outil d'alésage selon l'une des revendications 2 à 9, **caractérisé en ce que** les flancs (84, 86) des rainures d'entraînement des copeaux (26) englobent à proximité de leurs bords extérieurs en section transversale un angle inférieur à 90 °, de préférence compris entre 0 ° et 30°.

11. Outil d'alésage selon l'une des revendications 1 à 10, **caractérisé en ce que** les rainures d'entraînement des copeaux (26) présentent un contour de section transversale partiellement circulaire, de préférence semi-circulaire.

12. Outil d'alésage selon la revendication 11, **caractérisé en ce que** le contour de la section transversale des rainures d'entraînement des copeaux (26), au moins dans la zone d'un flanc (84, 86), s'étend en ligne droite jusqu'à son bord extérieur.

13. Outil d'alésage selon l'une des revendications 2 à 12, **caractérisé en ce que** le bord de limitation de préférence cintré (76) présente depuis le bord du creux de la plaque coupante (16), un espacement variable sur la longueur du bord, qui, en son endroit le plus étroit correspond à 0,1 à 0,4 fois le diamètre circulaire de la plaque coupante.

14. Outil d'alésage selon l'une des revendications 1 à 13, **caractérisé en ce que** les surfaces périphériques partiellement cylindriques (64) des parties de segments (62) et les surfaces périphériques partiellement cylindriques des nervures (28) se raccordant dans la direction d'évacuation des copeaux, se complètent en un cylindre périphérique commun interrompu par les logements des copeaux (60', 60") et les rainures d'entraînement des copeaux (26).

15. Outil d'alésage selon l'une des revendications 4 à 14, **caractérisé par** un segment de surface de guidage des copeaux (88), qui empiète côté frontal sur une partie de bord tranchant (90) disposée à l'intérieur des zones de travail se chevauchant mutuellement.

16. Outil d'alésage selon la revendication 15, **caractérisé en ce que** le segment de surface conductrice des copeaux (28) empiète côté frontal sur une partie de bord tranchant (90) disposée radialement vers l'extérieur d'une plaque coupante radialement la plus intérieure (18).

17. Outil d'alésage selon la revendication 15 ou 16, **caractérisé en ce que** le segment de surface conductrice des copeaux empiète côté frontal sur une partie de bord tranchant disposée radialement vers l'intérieur d'une plaque coupante radialement la plus extérieure (20).

18. Outil d'alésage selon l'une des revendications 1 à 17, **caractérisé par** une limitation de la surface conductrice des copeaux (92) se raccordant à la surface périphérique partiellement cylindrique d'une partie de segment (62) et s'étendant depuis la pointe de la tête tranchante en direction d'une zone de transition (76), qui dépasse au-dessus du plan de la face de coupe (68') d'une plaque coupante (18) décalée radialement vers l'intérieur par rapport à la périphérie dans la direction du logement des copeaux (60').

19. Outil d'alésage selon la revendication 18, **caractérisé en ce que** la limitation de la surface conductrice des copeaux (92) dépasse en coupe radiale et/ou en coupe axiale à la façon d'un gradin ou d'un coin au-dessus du plan de la face de coupe (68').

20. Outil d'alésage selon l'une des revendications 17 à 19, **caractérisé en ce que** la limitation de la surface conductrice des copeaux (92) diverge dans la direction d'évacuation des copeaux (74) tandis que s'élargit le logement des copeaux (60').

21. Outil d'alésage selon l'une des revendications 1 à 20, **caractérisé en ce que** plusieurs surfaces en gradins ou en ondulations (104) en retrait, depuis un bord de gradin ou d'ondulation (106) s'étendant radialement ou en biais par rapport à l'axe de l'outil d'alésage (34) dans la direction d'évacuation des copeaux (74), alors que s'élargit localement la section transversale de la rainure d'entraînement des copeaux (26), sont disposées au moins dans le flan côté plaque coupante (84) des rainures d'entraînement des copeaux (26) de façon à être axialement espacées les unes des autres.

22. Outil d'alésage selon la revendication 21, **caractérisé en ce que** les surfaces en gradins ou en ondulations individuelles (104) sont limitées au niveau de leur extrémité côté évacuation des copeaux par un autre bord de gradin ou d'ondulation (108) s'étendant radialement ou obliquement par rapport à l'axe de l'outil d'alésage (34), les surfaces en gradins ou en ondulations individuelles (104) comportant ce faisant un angle d'hélice, augmentant d'abord, puis décroissant ensuite dans la direction d'évacuation des copeaux (74) par rapport au pas des spirales du flanc de rainure concerné (84).

23. Outil d'alésage selon la revendication 21 ou 22, **caractérisé en ce que** les surfaces en gradins ou en ondulations (104) sont conçues sous forme de renfoncements dans les flancs côté plaque coupante (84) des rainures d'entraînement des copeaux (26) fermés ou ouverts en marge radialement vers l'extérieur au niveau de leurs bords de gradins ou d'ondulations (106, 108).

24. Outil d'alésage selon la revendication 23, **caractérisé en ce que** les renfoncements comportent au niveau de leurs bords de gradins ou d'ondulations (106, 108) un contour éventuellement ouvert en marge, ovale ou circulaire.

25. Outil d'alésage selon la revendication 23, **caractérisé en ce que** les renfoncements comportent au niveau de leurs bords de gradins ou d'ondulations (106, 108) un contour éventuellement ouvert en marge rectangulaire.

26. Outil d'alésage selon l'une des revendications 1 à 25, **caractérisé en ce que** les canaux de liquide de refroidissement (30, 32), en situation de développement des nervures (28), forment des trous profonds droits orientés obliquement à l'axe de l'outil d'alésage (34).

27. Outil d'alésage selon la revendication 26, **caractérisé en ce que** les trous profonds (30, 32) reposent dans un plan axial s'étendant à travers l'axe de l'outil d'alésage (34), les plans axiaux contenant les deux trous profonds englobant ce faisant un angle (α) différent de 180 ° autour de l'axe de l'outil d'alésage (34).

28. Outil d'alésage selon la revendication 27, **caractérisé en ce que** l'angle (α) englobé entre les plans axiaux est compris entre 155 ° et 175°.

29. Procédé de fabrication d'un outil d'alésage selon l'une des revendications 1 à 28, **caractérisé par** les étapes suivantes :
- on tourne un corps de matériau de base (42') suivant un contour d'outil d'alésage en réalisant une forme de départ (42") symétrique en rotation, cylindrique par segments, comportant éventuellement plusieurs parties en gradins de diamètres différents ;
- on forme ou on fraise dans un segment cylindrique (partie pour l'évacuation des copeaux 24) de la forme de départ (42"), deux rainures d'entraînement des copeaux (26) se faisant face, limitées axialement des deux côtés par une extrémité de sortie (100, 102), qui sont limitées au niveau de leurs flancs (84, 86) par des nervures longitudinales fixes (28) ;
- on forme ou on fraise au niveau de l'extrémité côté tête tranchante ou d'une extrémité côté couronne de découpe de la forme de départ (42V^{II}), deux logements pour les copeaux (60', 60") limités au niveau de leurs flancs respectivement par une surface conductrice des copeaux (66', 66") essentiellement parallèle à l'axe et par une surface de guidage des copeaux (72', 72"), la surface conductrice des copeaux (66', 66") et/ou la surface de guidage des copeaux (72', 72") coupant, dans la zone de l'extrémité de sortie (100) côté tête tranchante ou côté couronne de découpe, ou à l'intérieur de la tête tranchante, les flancs (84, 86) de la rainure d'entraînement des copeaux voisine (26), en formant un bord de limitation et une surface de transition (80, 82) en retraits par gradins ;
- on forme ou on fraise dans la forme de départ (42"') ou ses parties en gradins, les rainures d'entraînement des copeaux (26) d'abord sous forme de rainures longitudinales parallèles à l'axe ;
- on aménage des trous profonds (30, 32) dans la zone des nervures rectilignes (28), avant ou après le processus de formage ou de fraisage ;
- qui s'étendent depuis des zones disposées excentriquement sur la face frontale de l'extrémité de la forme de départ côté tête tranchante ou côté couronne de découpe, en biais par rapport à l'axe du cylindre (34) de la forme de départ (42^{IV}), en direction d'un trou borgne central (36) dans la tige du foret exempte de nervures (12) et qui traversent leurs fonds ;
- la forme de départ préparée de cette façon (42^{V}) est chauffée à une température prédéterminée en des zones de serrage (104, 106) disposées de façon à être axialement espacées les unes des autres dans une zone nervurée se trouvant entre les zones de serrage et est soumise en les zones de serrage à un moment de torsion coaxial et ce faisant tordue en spirales par déformation plastique dans la zone chauffée suivant un angle prédéfini ;
- l'angle de torsion dans la zone des nervures (28) étant ce faisant modifié par la formation d'un pas de spirales augmentant axialement continuellement ou par échelons.

30. Procédé selon la revendication 29, **caractérisé en ce que** les rainures d'entraînement des copeaux (26) peuvent être aménagées dans la forme de départ (42"') au moyen d'une fraiseuse à disque et/ou d'une fraiseuse à matrices, une surface de transition (80, 82) concave et adaptée à la forme toroïde de la fraise à disque et/ou à la forme sphérique de la fraiseuse à matrices étant ainsi d'abord générée au niveau des extrémités de sortie côté tête tranchante ou côté couronne de découpe.

31. Procédé selon la revendication 29 ou 30, **caractérisé en ce que** l'on fraise une rainure d'entraînement des copeaux (26), de section transversale partiellement circulaire, qui s'étend de façon rectiligne au moins au niveau du flanc de la rainure côté plaque coupante (84) jusqu'au bord extérieur.

32. Procédé selon l'une des revendications 29 à 31, **caractérisé en ce que** les rainures longitudinales (26) sont fraisées dans la forma de départ cylindrique (42"') ou ses parties en gradins, avec une profondeur décroissante dans la direction d'évacuation des copeaux.

33. Procédé selon l'une des revendications 29 à 32, **caractérisé en ce que** la forme de départ (42^{V}) est tordue dans la zone entre les zones de serrage avec une zone de chauffage se déplaçant axialement de façon continue ou échelonnée.

34. Procédé selon l'une des revendications 29 à 33, **caractérisé en ce que** l'on fraise, de préférence au moyen d'une fraiseuse à matrices, au moins dans les flancs de rainures côté plaque coupante (84), des surfaces de gradins ou d'ondulations (104) limitées par des bords sensiblement radiaux (106, 108) et disposées de façon à être axialement espacées les unes par rapport aux autres.
